# EUROPEAN PATENT APPLICATION

(11) **EP 4 701 014 A1**
(43) Date of publication of application: **25.02.2026**
(21) Application number: 25192308.2
(22) Date of filing: 29.07.2025
(51) Int. Cl.: H02G 5/08

(54) **TAP-OFF BOX HAVING DUAL PLUG-INS AND BUSWAY SYSTEM INCLUDING THE SAME**

(30) Priority: 20.08.2024 US 202418809703
(71) Applicant: Eaton Intelligent Power Limited, Dublin 4, D04 Y0C2 (IE)
(72) Inventor: Deore, Kundan J., 422010 Nashik (IN); Lawlor, Walter James, Hodges, 29653 (US); Ulsaker, Jonathan, Anderson, 29625 (US); Agarwal, Archit, Greenwood, 29649 (US)
(74) Representative: Epping - Hermann - Fischer

(57) **Abstract**

A dual plug-in bus plug (200) for use in a busway system (2) including a busway (10) and a first and second consecutive plug-ins (12, 13) disposed on the busway (10). The dual plug-in bus plug (200) includes: a housing (201) including a base (202), a first plug-in connector (220) structured to be inserted into the first plug-in (12) and a second plug-in connector (230) structured to be inserted into the second plug-in (13), wherein the first and second plug-in connectors (220, 230) are structured to distribute current from the busway (10) upon being inserted into the plug-ins (12, 13); line side busbars (222) electrically connected to the first and second plug-in connectors (220, 230); and a circuit protection device (210) disposed within the housing (201) and electrically connected to the first and second plug-in connectors (220, 230) via the line side busbars (222) and to a load, the circuit protection device (210) structured to provide the current to the load during normal operation and interrupt the current from flowing to the load during a fault.

## Description

### FIELD OF THE INVENTION:

The disclosed concept relates generally to bus plugs, and in particular, to bus plugs having dual plug-ins.

### BACKGROUND OF THE INVENTION:

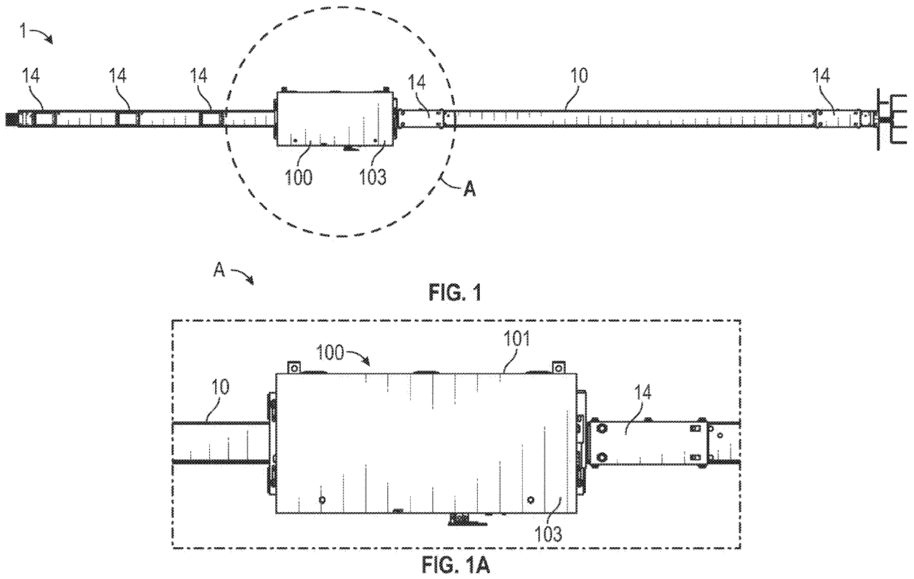

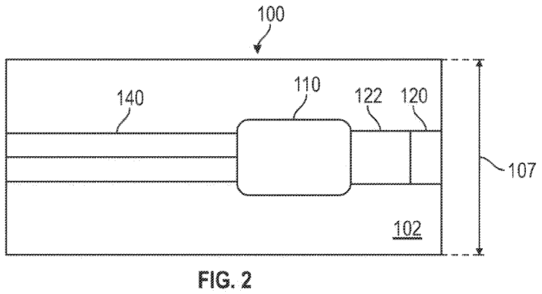

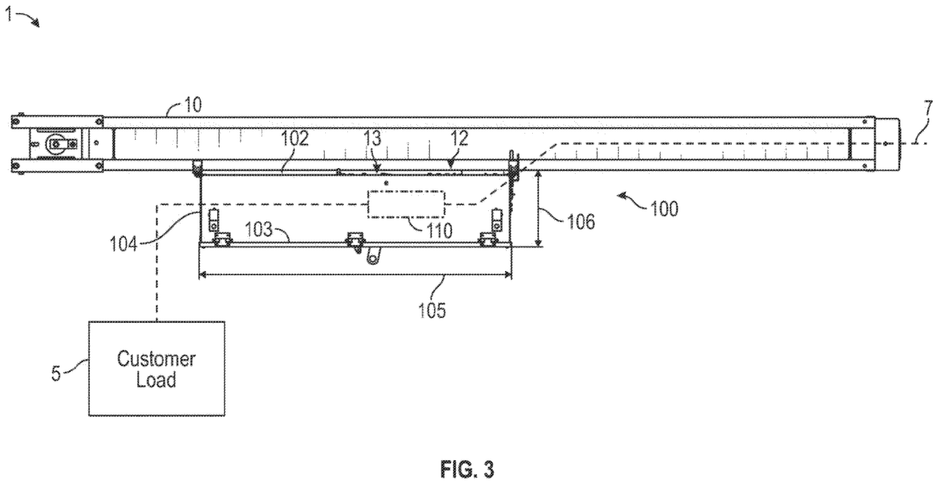

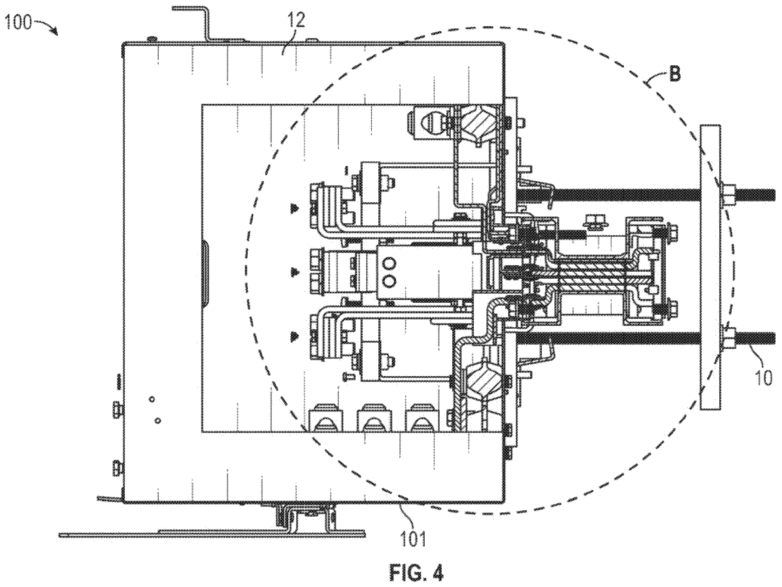

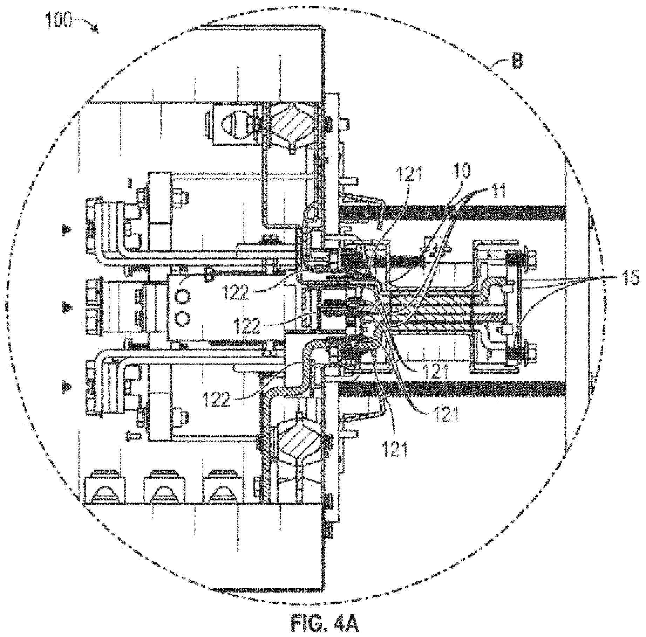

Bus plugs are electrical devices employed to connect to a busway or bus duct and provide power localized power distribution to one or more loads (e.g., without limitation, load panels, switchgears and motors) in an electrical distribution system. A busway is a prefabricated electrical distribution system that contains bus bars in a protective metal enclosure. The bus bars conduct electricity and distribute power to the loads. A busway can extend horizontally, vertically or any combination thereof. Figures 1-4A illustrate a conventional bus plug 100 and a busway system 1 including the bus plug 100 plugged into a conductive section (also referred to herein as a "busway window" or "plug-in ports") thereof. Figures 1-1A show a busway system 1 including a busway 10 extending horizontally over, e.g., without limitation, a wall and a conventional bus plug 100 being plugged into the busway. Figure 2 is a plan view of the interior of the conventional bus plug 100 and Figure 3 is a top view of the busway system 1 of Figure 1. Figures 4-4A illustrate the electrical connection of the bus plug 100 and the busway 10.

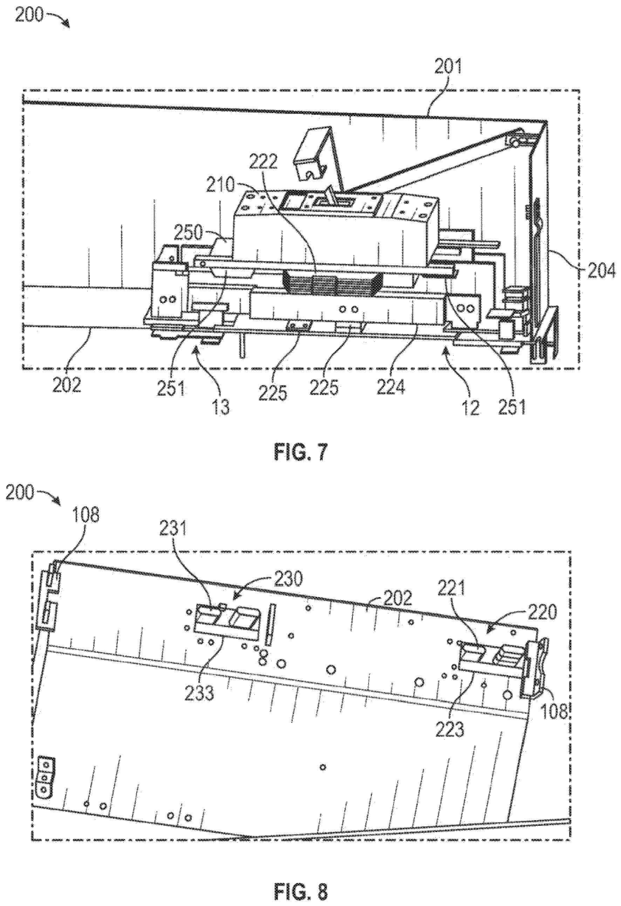

The busway system 1 includes a busway 10 having a plurality of consecutive plug-in ports 14 into which bus plugs 100 are inserted. For clarity of the illustration, only two consecutive plug-in ports (the first and second plug-in ports 12,13) are shown in Figure 3, but it is to be understood that the busway 10 includes as many plug-in ports as appropriate. A bus plug 100 includes a housing 101, electrical components (e.g., without limitation, a circuit breaker 110 and a grounding lug (not shown)), a single plug-in connector 120, breaker line connections (line side busbars) 122 and load side connections including load side cables 140. The housing 101 is rectangular in shape and includes a base 102, a front cover 103, and sidewalls 104. The housing dimensions (e.g., length 105, height 106, and width 107) depend on the application (i.e., the type and current rating of the loads 5) of the bus plug 100. When installed, the housing 101 is plugged into the first plug-in port 12 only. Due to its length 105, however, the bus plug 100 blocks the second plug-in port 13 without being electrically connected to the second plug-in port 13. Thus, the bus plug 100 taps power from the first plug-in port 12 only. The housing 101 is structured to be removably attached to the busway 10 via flanges 108 (as shown in Figure 8) disposed on the base 102 and fixing components such as screws (not shown). The circuit breaker 110 is disposed withing the housing 101 and connected to the line side connections 122 at its line terminal (not shown). The circuit breaker 110 may be a standard molded case circuit breaker having an 800A current rating.

As illustrated in Figure 3, the bus plug 100 is electrically connected to the first plug-in port 12 via the plug-in connector 120. The single plug-in connector 120 includes a plurality of fingers 121 connected to line side connections 122. The fingers 121 are spring-loaded and protrude transversely outward from the base 102 through a bus plug opening. The fingers 121 are structured to be inserted into the first plug-in port 12 and contact busway stabs 11. That is, a pair of fingers 121 become electrically connected upon insertion and compress respective busway stabs 11 between the fingers 121 and maintain the electrical connection by a constant spring force as shown in Figures 4 and 4A. The fingers 121 and the stabs 11 are made of conductive materials (e.g., without limitation, copper or brass) to facilitate the flow of the electrical current 7 (as shown in Figure 1) from the busway 10 to the loads 5 via the circuit breaker 110. Thus, upon installation and connecting the bus plug 100 to the busway 10, the current 7 flows from the busway 1 to the loads 5 via the busway stabs 11, the line side connections 122, the circuit breaker 110 and the load cables 140 as shown in Figure 3. The bus plugs 100 are removably connected to the plug-in ports at various locations within the busway system 1 and tap into the power from the busway 10 at those locations to supply power to the loads 5. Such dynamic power distribution capability at any locations within the busway system 1 has made the bus plugs 100 a popular means for providing power to equipment in industrial, commercial and business settings.

However, since the single plug-in connector 120 utilizes spring-loaded contacts 121, the bus plugs 100 are subject to the safety regulatory standards that limit a permissible temperature rise at the plug-in contacts 121 to 30°C above ambient temperature or less. Such limitation renders achieving higher ratings (e.g., without limitation, 800A) difficult in the bus plugs 100. Thus, even if the bus plugs 100 has an 800A current rating, the existing bus plugs 100 can only have application current at 80% of its rated current, e.g., without limitation, 640A.

There is room for improvement in electrical distribution in the busway systems, and in particular the bus plugs.

### SUMMARY OF THE INVENTION:

These needs, and others, are met by a dual plug-in bus plug for use in a busway system including a busway and a first and second consecutive plug-in ports disposed on the busway. The dual plug-in bus plug includes a housing including a base, a first plug-in connector structured to be inserted into the first plug-in port and a second plug-in connector structured to be inserted into the second plug-in port, wherein the first and second plug-in connectors are structured to draw and distribute current from the busway upon being inserted into the first and second plug-in ports; line side busbars electrically connected to the first and second plug-in connectors; and a circuit breaker disposed within the housing and electrically connected to the first and second plug-in connectors via the line side busbars and to a load via load cables, the circuit breaker structured to provide the current from the busway to the load during normal operation and interrupt the current from flowing to the load during a fault.

Another example embodiment includes a busway system. The busway system includes one or more busways having a plurality of busway plug-in ports including a first busway plug-in port and a second busway plug-in port consecutive to the first busway plug-in port; and a dual plug-in bus plug that comprises: a housing including a base, a first plug-in connector structured to be inserted into the first plug-in port and a second plug-in connector structured to be inserted into the second plug-in port, wherein the first and second plug-in connectors are further structured to draw and distribute current from the busway upon being inserted into the first and second plug-in ports; line side busbars electrically connected to the first and second plug-in connectors; and a circuit breaker disposed within the housing and electrically connected to the first and second plug-in connectors via the line side busbars and to a load via load cables, the circuit breaker structured to provide the current from the busway to the load during normal operation and interrupt the current from flowing to the load during a fault.

### BRIEF DESCRIPTION OF THE DRAWINGS:

A full understanding of the invention can be gained from the following description of the preferred embodiments when read in conjunction with the accompanying drawings in which:
Figure 1 is a front view of a busway system including a busway and a conventional bus plug electrically connected to the busway;
Figure 1A is an enlarged view of an area A of Figure 1 including the conventional bus plug;
Figure 2 is a plan view of the interior of a conventional bus plug ;
Figure 3 is a top view of the busway system 1 of Figure 1.
Figure 4 illustrates the electrical connection of the bus plug and the busway of Figure 1;
Figure 4A is an enlarged view of an area B of Figure 4 showing the electrical connection of the bus plug and the busway;
Figure 5 is a front view of a busway system including an exemplary dual plug-in bus plug in accordance with a non-limiting, example embodiment of the disclosed concept;
Figure 6 is a side view of the busway system of Figure 5;
Figure 7 is an isometric view of the interior of an exemplary dual plug-in bus plug in accordance with a non-limiting, example embodiment of the disclosed concept;
Figure 8 is a perspective view the exterior of the dual plug-in bus plug of Figure 5;
Figure 9 is a perspective isometric view of the interior of the dual plug-in bus plug with of the front cover and portions of the sidewall and the base having been removed for clarity of illustration in accordance with a non-limiting, example embodiment of the disclosed concept;
Figure 9A is a perspective isometric view of the dual plug-in bus plug of the Figure 9;
Figure 9B is an enlarged view of an area C of Figure 9A showing an interlock in accordance with a non-limiting example embodiment of the disclosed concept;
Figure 10 is a side view of the interior of the dual plug-in bus plug of Figure 5 electrically connected to the busway in accordance with a non-limiting, example embodiment of the disclosed concept;
Figure 11 is an elevation view of another exemplary dual plug-in bus plug connected to a busway in accordance with a non-limiting, example embodiment of the disclosed concept; and
Figure 12 is elevation view of another exemplary dual plug-in bus plug connected to a busway in accordance with a non-limiting, example embodiment of the disclosed concept.

### DETAILED DESCRIPTION OF THE INVENTION:

Directional phrases used herein, such as, for example, left, right, front, back, top, bottom and derivatives thereof, relate to the orientation of the elements shown in the drawings and are not limiting upon the claims unless expressly recited therein.

As employed herein, the statement that two or more parts are "coupled" together shall mean that the parts are joined together either directly or joined through one or more intermediate parts.

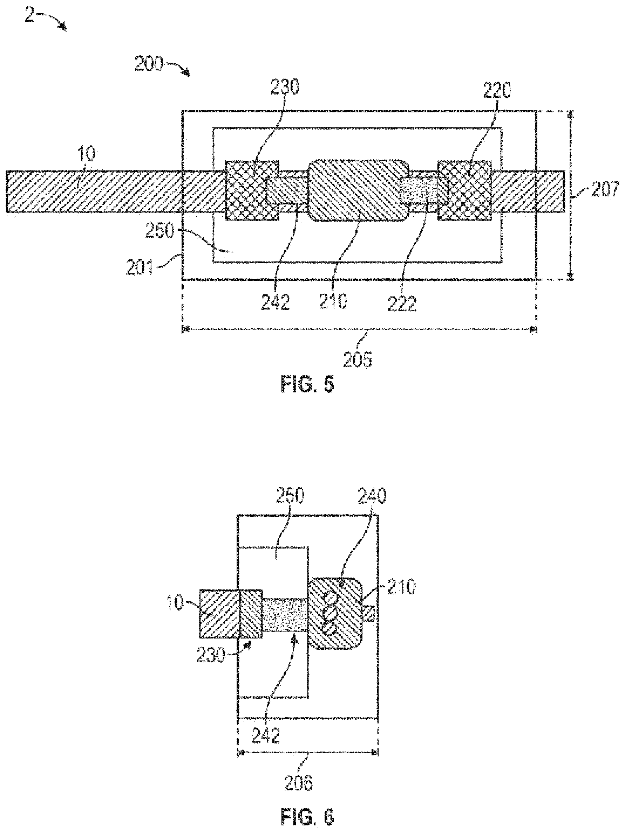

Figures 5-10 illustrate an exemplary inventive dual plug-in bus plug 200 for use in a busway system 2 in accordance with a non-limiting, exemplary embodiment of the disclosed concept. The dual plug-in bus plug 200 includes a housing 201, two consecutive plug-in connectors, breaker line connections 222 and breaker load connections 242. The housing 201 is rectangular in shape and includes a base 202 extending longitudinally, sidewalls 204 extending upward from the base 202 and a front cover (not shown). The base 202 includes two bus plug openings 223, 233. The line connections 222 are line side busbars connecting a circuit protection device 210 to the plug-in ports 12,13, and the load connections 242 include load side cables 240 connecting the circuit protection device 210 to the loads (not shown). In some examples, the dual plug-in bus plug 200 also includes busbar supports 224,225 for the line connections 222 as shown in Figure 7. The consecutive plug-in connectors include a first plug-in connector 220 and a second plug-in connector 230 disposed in proximity to the first plug-in connector 220. The first and second plug-in connectors 220,230 are disposed on the base 202 and structured to be inserted into the first and second plug-in ports 12,13 and electrically connect the bus plug 200 to the busway 10. Each connector 220,230 includes a plurality of fingers 221,231 extending transversely outward through respective bus plug openings 223,233 as shown in Figure 8. Fingers 221,231 each include a built-in spring (not shown). Pairs of the fingers 221,231 each electrically connect to corresponding busway stabs 11 therebetween and compress inward by a constant spring force to maintain the electrical connection to the busway busbars 15 connected to the stabs 11. The fingers 221,231 are connected to the line connections 222 at one end. The line connections 222 are in turn connected to the line terminal (not shown) of the circuit protection device 210. While Figures 4 and 7 show three line side busbars each connected to a pair of respective fingers, this is for illustrative purposes only, and thus the bus plugs may have different numbers of busbars and/or fingers without departing from the scope of the disclosed concept.

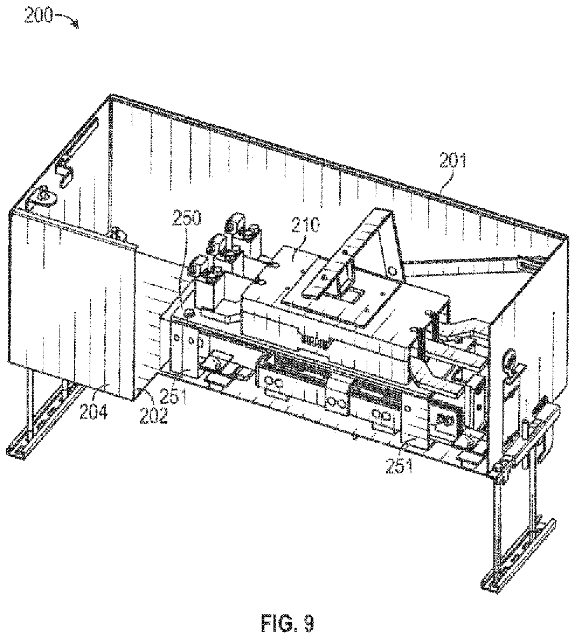

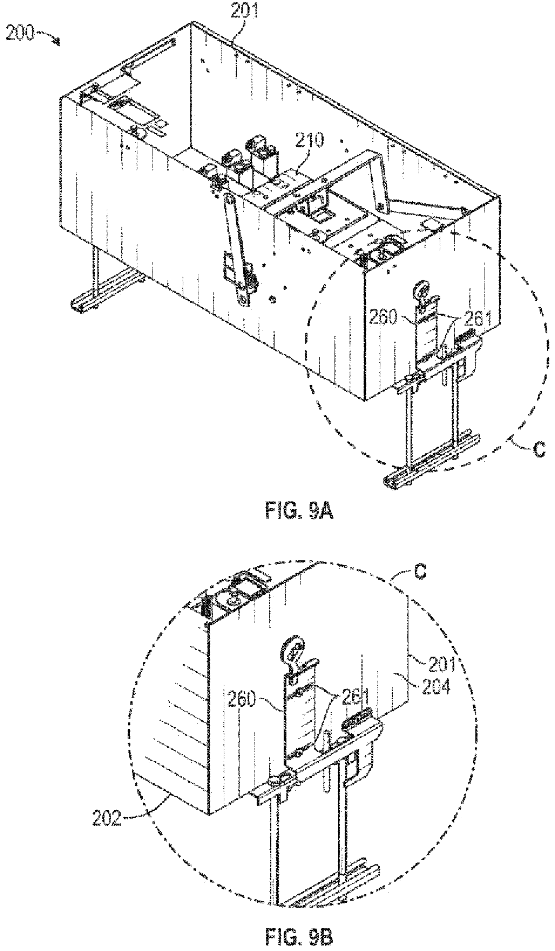

The dual plug-in bus plug 200 also includes the circuit protection device 210 and a separation platform 250. The circuit protection device 210 is structured to interrupt the current from flowing to the load during a fault and may be, e.g., without limitation, a circuit breaker, a fusible switching device or any other appropriate current protection device without departing from the scope of the disclosed concept. For clarity, a circuit breaker is described as the circuit protection device 210 herein. However, the description of the circuit breaker 210 relative to the dual plug-in 200 is also applicable to, e.g., without limitation, a fusible switch device or any other appropriate circuit protection device without departing from the scope of the disclosed concept. The circuit breaker 210 is a standard molded case circuit breaker having a higher current rating, e.g., without limitation, 800A. The separation platform 250 includes one or more breaker supports 251 that extend transversely between the separation platform 250 and the base 202. The separation platform 250 is structured to elevate the circuit breaker from the base 202 of the housing 201 such that the first and second plug-in connectors 220,230 and the line side busbars 222 are disposed below the circuit breaker 210. The one or more breaker supports 251 may be C-shaped brackets (as shown in Figure 9) and structured to support the circuit breaker 210 and ensure that the circuit breaker 210 remains firmly secured on the separation platform 250. They may be made of, e.g., without limitation, molded thermoplastic. As such, the circuit breaker 210 of the inventive dual plug-in bus plug 200 is not disposed on the base 202 of the housing 201. Instead, the circuit breaker 210 is elevated from the base 202 and disposed on top of the separation platform 250. Such elevation of the circuit breaker 210 allows the breaker line connections 222 connected to the first and second plug-in connectors 220,230 to run underneath the circuit breaker 210 and electrically connect to the line terminal of the circuit breaker 210 to feed the current from the busway 10. While the length 205 and width 207 (see Figure 5) of the dual plug-in bus plug 200 remains the same as those of the conventional bus plug 100, the height 206 (see Figure 6) of the housing 201 is greater (e.g., without limitation, at least by the height of the circuit breaker 210) than the height 106 of the housing 101 of the conventional bus plug 100. However, such increase in the height 206 is minimal and requires little or no changes to the existing busway system when retrofitting. In some exemplary embodiments, the dual plug-in bus plug 200 may include an interlock 260 having two vertically spaced-apart guides 261 as shown in Figures 9A and 9B in order to account for weight shift from elevating the circuit breaker 210 in preventing the energized dual plug-in bus plug 200 from being inadvertently unplugged from the busway 10.

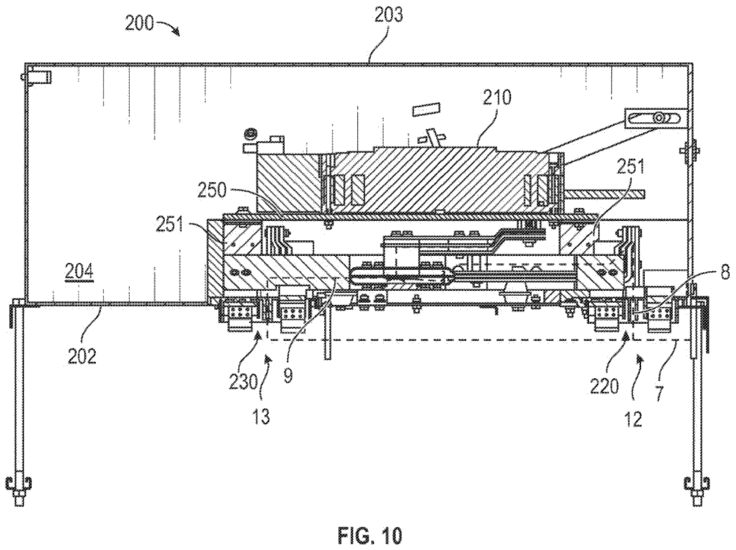

Upon installing and electrically connecting the dual plug-in bus plug 200 to the busway 10, the dual plug-in bus plug 200 distributes the current 7 over the consecutive plug-in connections 220,230. As shown in Figure 10, the dual plug-in bus plug 200 splits the current 7 from the busway 10 into split-current 8 (lower than the current rating) flowing to the circuit breaker 210 via the first plug-in connector 220 from the first plug-in port 12 and split-current current 9 flowing to the circuit breaker 210 via the second plug-in connector 230 from the second plug-in port 13. For example and without limitation, the split-currents 8,9 may each be 50% or more of the current rating. Then, the split-currents 8,9 become aggregated at the line terminal of the circuit breaker 210 as shown in Figure 10. That is, if the dual plug-in bus plug 200 has its current rating at 800A, the first and second plug-in connections 220, 230 may each tap, e.g., without limitation, 640A from the respective plug-in ports 12,13 and the split-currents 8,9 become converged at the line terminal of the circuit breaker 210 up to the 100% of the 800A current rating. Allowing the bus plug 200 to tap less than the current rating at each plug-in connector 220,230 reduces the amount of temperature rise at the plug-in contacts (fingers) 221,231 well below the permissible temperature rise limit under the safety standards. Further, converging the split-currents 8,9 at the line terminal of the circuit breaker 210 allows the dual plug-in bus plug 200 to be utilized to the 100% of its rated current capacity unlike the conventional bus plugs 100 that must adhere to the application current of 80% of their rated current in order to satisfy the safety standards. In short, the dual plug-in bus plug 200 of the disclosed concept resolves the problem of the conventional bus plugs 100, namely the inability to utilize the 100% of their current ratings due to the permissible temperature rise limit under the safety standards. Further, the dual plug-in bus plug 200 of the disclosed concept allows its current rating to be increased beyond 800A, which has been impossible with the conventional bus plugs 100. In addition, since the design of the dual plug-in bus plug 200 requires no change in the existing busway, the dual plug-in bus plug 200 can be retrofittable on the existing busway systems and components. Finally, the dual plug-in bus plug 200 has the most compact design as compared to the designs of the existing bus plugs available in the market, rendering the dual plug-in bus plugs 200 even more retrofittable.

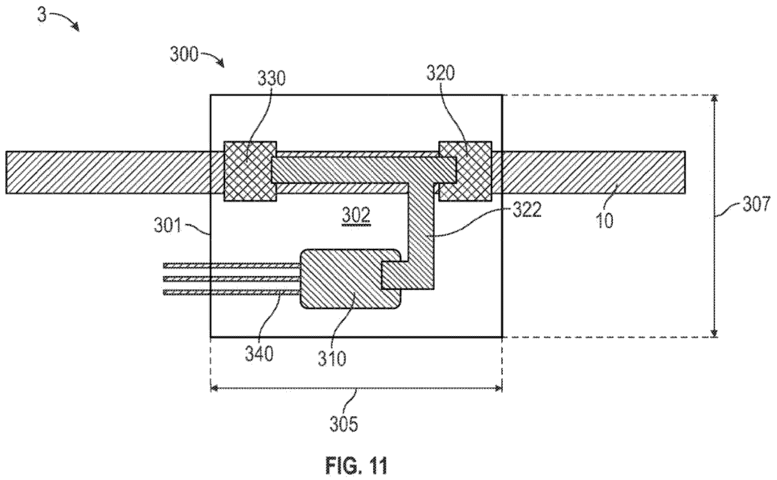

Figure 11 illustrates a busway system 3 including another exemplary dual plug-in bus plug 300 in accordance with a non-limiting example embodiment of the disclosed concept. The dual plug-in bus plug 300 is similar to the dual plug-in bus plug 200 of Figures 5-10 except in that the circuit breaker 310 of the dual plug-in bus plug 300 is disposed longitudinally on the base 302 of the housing 301 away from the breaker line connections 322. As such, the heat can be transferred directly from the housing 301 to the ambient, thereby reducing temperature rise at the plug-in contacts (the fingers) of the first and second plug-in connectors 320,330. In this embodiment, the length 305 and the height of the housing 301 remains the same as the those of the conventional bus plug 100, but the width 307 of the housing 301 will increase as compared to that of the conventional bus plug 100. However, such change in dimensions requires no adjustments to the existing busway systems, rendering the busway systems retrofittable.

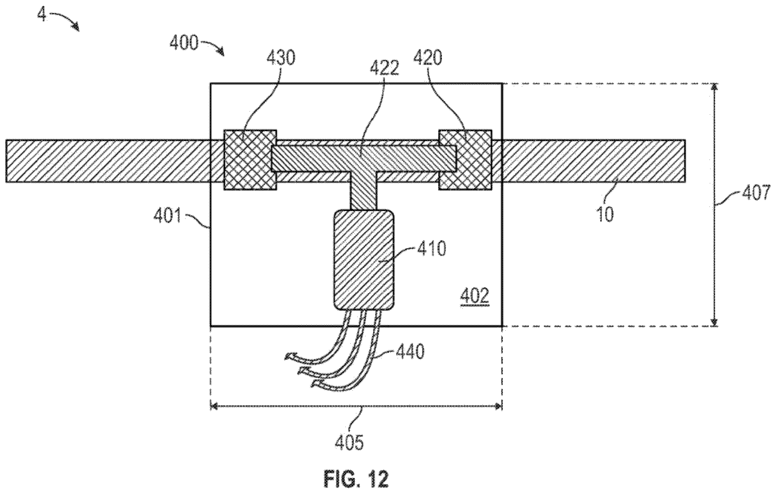

Figure 12 illustrates a busway system 4 including another exemplary dual plug-in bus plug 400 in accordance with a non-limiting example embodiment of the disclosed concept. The dual plug-in bus plug 400 is similar to the dual plug-in bus plug 200 of Figures 5-10 except in that the circuit breaker 410 of the dual plug-in bus plug 400 is disposed vertically on one side of the base 402 of the housing 401 away from the side on which the breaker line connections 422 are disposed. Similar to the dual plug-in bus plug 300, the dual plug-in bus plug 400 allows the heat to be transferred directly from the housing 401 to the ambient, thereby reducing temperature rise at the plug-in contacts (the fingers) of the first and second plug-in connections 420,430. Further, the vertical positioning of the circuit breaker 410 allows an even better heat distribution than the bus plug 300 based on the fact that the cold air sinks and the hot air rises. In this embodiment, the length 405 decreases and the width 407 increases as compared to those of the housing 101 of the conventional bus plug 100. However, such change in dimensions requires no adjustments to the existing busway systems, rendering the busway systems retrofittable.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A dual plug-in bus plug for use in a busway system including a busway and a first and second consecutive plug-in ports disposed on the busway, the dual plug-in bus plug comprising:
a housing including a base,
a first plug-in connector structured to be inserted into the first plug-in port and a second plug-in connector structured to be inserted into the second plug-in port, wherein the first and second plug-in connectors are structured to draw and distribute current from the busway upon being inserted into the first and second plug-in ports;
line side busbars electrically connected to the first and second plug-in connectors; and
a circuit protection device disposed within the housing and electrically connected to the first and second plug-in connectors via the line side busbars and to a load via load cables, the circuit protection device structured to interrupt the current from flowing to the load during a fault.

2. The dual plug-in bus plug of claim 1, wherein the first plug-in connector and the second plug-in connector each distribute currents lower than the current rating of the dual plug-in bus plug and ensure that temperature rise at the first and second plug-in connectors is within a permissible range under safety standards.

3. The dual plug-in bus plug of claim 2, wherein the currents distributed by the first and second plug-in connectors are aggregated at the circuit protection device, wherein upon aggregation of the currents distributed by the first and second plug-in connectors, the dual plug-in bus plug is able to operate at 100% of the current rating thereof, and wherein upon aggregation of the currents distributed by the first and second plug-in connectors, the dual plug-in bus plug allows the circuit protection device to operate at 100% of the current rating of the circuit protection device.

4. The dual plug-in bus plug of claim 1, further comprising:
a separation platform structured to elevate the circuit protection device from the base of the housing such that the first and second plug-in connectors and the line side busbars are disposed below the circuit protection device.

5. The dual plug-in bus plug of claim **1,** wherein the circuit protection device is disposed longitudinally on the base of the housing and away from the line side busbars and wherein the longitudinal disposition of the circuit protection device on the base allows heat transfer directly from the housing to the ambient and reduces temperature rise at the first and second plug-in connectors.

6. The dual plug-in bus plug of claim 1, wherein the circuit protection device is disposed vertically on the base of the housing and away from the line side busbars and wherein the vertical disposition of the circuit protection device on the base allows heat transfer directly from the housing to the ambient and reduces temperature rise at the first and second plug-in connectors.

7. The dual plug-in bus plug of claim 1, wherein the first and second plug-in connectors each include a plurality of spring-loaded fingers.

8. The dual plug-in bus plug of claim 1, wherein the current rating of the dual plug-in bus plug is increased beyond 800A.

9. A busway system comprising:
one or more busways having a plurality of busway plug-in ports including a first busway plug-in port and a second busway plug-in port consecutive to the first busway plug-in port; and
a dual plug-in bus plug that comprises:
a housing including a base,
a first plug-in connector structured to be inserted into the first plug-in port and a second plug-in connector structured to be inserted into the second plug-in port, wherein the first and second plug-in connectors are structured to draw and distribute current from the busway upon being inserted into the first and second plug-in ports;
line side busbars electrically connected to the first and second plug-in connectors; and
a circuit protection device disposed within the housing and electrically connected to the first and second plug-in connectors via the line side busbars and to a load via load cables, the circuit protection device structured to interrupt the current from flowing to the load during a fault.

10. The busway system of claim 10, wherein the first plug-in connector and the second plug-in connector each distribute currents lower than of the current rating of the dual plug-in bus plug and ensure that temperature rise at the first and second plug-in connectors is within a permissible range under safety standards.

11. The busway system of claim 10, wherein the currents distributed by the first and second plug-in connectors are aggregated at the circuit protection device, wherein upon aggregation of the currents distributed by the first and second plug-in connectors, the dual plug-in bus plug is able to operate at 100% of the current rating thereof, and wherein upon aggregation of the currents distributed by the first and second plug-in connectors, the dual plug-in bus plug allows the circuit protection device to operate at 100% of the current rating of the circuit protection device.

12. The busway system of claim 9, further comprising:
a separation platform structured to elevate the circuit protection device from the base of the housing such that the first and second plug-in connectors and the line side busbars are disposed below the circuit protection device .

13. The busway system of claim 9, wherein the circuit protection device is disposed longitudinally on the base of the housing and away from the line side busbars and wherein the longitudinal disposition of the circuit protection device on the base allows heat transfer directly from the housing to the ambient and reduces temperature rise at the first and second plug-in connectors.

14. The busway system of claim 9, wherein the circuit protection device is disposed vertically on the base of the housing and away from the line side busbars and wherein the vertical disposition of the circuit protection device on the base allows heat transfer directly from the housing to the ambient and reduces temperature rise at the first and second plug-in connectors.

15. The busway system of claim 9, wherein the current rating of the dual plug-in bus plug is increased beyond 800A.
